# EUROPÄISCHE PATENTSCHRIFT

(11) **EP 3 715 073 B1**
(45) Veröffentlichungstag und Bekanntmachung des Hinweises auf die Patenterteilung: **07.06.2023**
(21) Anmeldenummer: 20156062.0
(22) Anmeldetag: 07.02.2020
(51) Int. Cl.: B23Q 11/06, B27G 19/02, B27G 19/08

(54) **SÄGE**
SAW
SCIE

(30) Priorität: 29.03.2019 DE 102019108156
(43) Veröffentlichungstag der Anmeldung: 30.09.2020
(73) Patentinhaber: Mafell AG, 78727 Oberndorf a.N. (DE)
(72) Erfinder: MAIER, Andreas, 78737 Fluorn-Winzeln (DE); GÜHRING, Samuel, 72250 Freudenstadt (DE); DAGNER, Jürgen, 78727 Oberndorf (DE); KAUFMANN, Dieter, 72186 Empfingen (DE); LUNZE, Stefan, 78727 Oberndorf am Neckar (DE); HAAS, Gerd, 72175 Dornhan-Weiden (DE)
(74) Vertreter: Manitz Finsterwald Patent- und Rechtsanwaltspartnerschaft mbB

(56) Entgegenhaltungen:
- EP-A2- 2 168 736
- DE-A1- 3 219 901
- DE-A1-102006 049 925
- DE-C1- 19 650 430
- US-A1- 2015 343 662

## Beschreibung

Die Erfindung betrifft eine Unterflur-Zugsäge oder Tischkreissäge gemäß dem Oberbegriff des Anspruchs 1 mit einem Arbeitstisch, der eine Arbeitsfläche zur Auflage von zu bearbeitenden Werkstücken bereitstellt, einem Sägeblatt, das teilweise unter der Arbeitsfläche liegt und zumindest während des Sägebetriebs über die Arbeitsfläche hinaus nach oben vorsteht, einem unter der Arbeitsfläche angeordneten Antrieb für das Sägeblatt, der dazu ausgebildet ist, das Sägeblatt während des Sägebetriebs in Rotation zu versetzen, einem Träger, der unterhalb der Arbeitsfläche an einem Halter abgestützt ist und über die Arbeitsfläche hinaus nach oben vorsteht, und einer von dem Träger getragenen Schutzabdeckung, die dazu ausgebildet ist, in einer Schutzstellung vor einem Eingriff in das Sägeblatt zu schützen, wobei in die Schutzabdeckung zumindest eine elektrische oder elektronische Funktionseinheit integriert ist, wobei unterhalb der Arbeitsfläche eine Basiseinheit für die Funktionseinheit angeordnet ist, und wobei die Funktionseinheit über eine Versorgungs- und/oder Kommunikationsstrecke mit der Basiseinheit verbunden ist. Eine solche Säge ist aus der EP 2 168 736 A2 bekannt.

Es besteht das zunehmende Bedürfnis, die Schutzabdeckung einer derartigen Säge für zusätzliche Funktionen zu nutzen, beispielsweise zur Beleuchtung des Arbeitsbereiches oder zur Integration von z.B. die Arbeitssicherheit erhöhenden Sensoren, welche zum Beispiel die Annäherung einer menschlichen Hand an die Schutzabdeckung und damit an das Sägeblatt erfassen können.

Problematisch im Zusammenhang mit derartigen Funktionseinheiten sind deren Versorgung mit Energie sowie die Kommunikation, um beispielsweise Daten an eine externe Auswerteeinheit oder Steuersignale von einer externen Steuereinheit an die Funktionseinheit zu übermitteln. Die Unterbringung von hierfür geeigneten Versorgungs- bzw. Kommunikationseinheiten ebenfalls in der Schutzabdeckung ist grundsätzlich möglich, jedoch häufig aufgrund des begrenzten Bauraumes sowie aufgrund der begrenzten Kapazität von batteriebetriebenen Einheiten für die Praxis meist ungeeignet.

Aus DE 32 19 901 A1 ist es bereits bekannt, eine an einer Schutzhaube einer Tischkreissäge angebrachte Warnlampe durch einen kleinen Generator mit Energie zu versorgen, der unterhalb einer Tischplatte der Säge angeordnet ist, wobei ein Halter der Schutzhaube oder der Spaltkeil der Säge als elektrischer Leiter verwendet wird. Von Nachteil ist hierbei zum einen die begrenzte Funktionalität, die auf eine reine Stromversorgung beschränkt ist. Problematisch ist auch der elektrische Anschluss der Warnlampe einerseits und des Generators andererseits an den Halter bzw. an den Spaltkeil, da hierdurch ein in der Praxis häufig gewünschtes Verstellen oder Abnehmen der Schutzhaube erschwert oder gar unmöglich gemacht wird. Darüber hinaus ist die Verwendung des Halters bzw. Spaltkeils als stromführende Komponente auch im Hinblick auf die Arbeitssicherheit problematisch, wenn keine Maßnahmen zur elektrischen Isolierung getroffen werden. Derartige Maßnahmen würden einen höheren Herstellungsaufwand bedeuten und wären auch insofern nachteilig, als der Spaltkeil funktionsbedingt eine bestimmte Dicke nicht überschreiten darf.

Aufgabe der Erfindung ist es, eine Säge der eingangs genannten Art dahingehend zu verbessern, dass die Schutzabdeckung auf einfache und zuverlässige Weise für die Integration von grundsätzlich beliebigen Funktionseinheiten genutzt werden kann.

Die Lösung dieser Aufgabe erfolgt durch die Merkmale des Anspruchs 1. Erfindungsgemäß ist vorgesehen, dass die Versorgungs- und/oder Kommunikationsstrecke, über welche die in die Schutzabdeckung integrierte elektrische oder elektronische Funktionseinheit mit der unterhalb der Arbeitsfläche angeordneten Basiseinheit verbunden ist, ein elektrisches Leitungssystem umfasst, und dass dieses elektrische Leitungssystem in den Träger integriert ist.

Die Erfindung schlägt folglich einen anderen Weg ein als in der oben genannten DE 32 19 901 A1 vorgesehen, indem der Träger für die Schutzabdeckung nicht selbst als elektrischer Leiter eingesetzt wird, sondern indem das elektrische Leitungssystem in den Träger integriert wird. Dies wurde bislang für unrealisierbar gehalten, da bei einer Säge der hier in Rede stehenden Art der Träger einer für das Sägeblatt vorgesehenen Schutzabdeckung nicht dicker sein darf als das Sägeblatt und somit vermeintlich keinen Bauraum zur Verfügung stellen kann.

Durch die erfindungsgemäße Integration des elektrischen Leitungssystems in den Träger ist es nicht erforderlich, Einrichtungen zur Energieversorgung oder zur Kommunikation, die relevanten Bauraum benötigen, zusätzlich zu der Funktionseinheit innerhalb der Schutzabdeckung anzuordnen. Vielmehr können derartige Basiseinheiten unterhalb der Arbeitsfläche platziert werden, wo genügend Bauraum zur Verfügung steht. Durch die Integration des elektrischen Leitungssystems in den Träger eröffnen sich zudem Kontaktierungsmöglichkeiten, die sowohl ein einfaches Verstellen des Trägers relativ zum Halter als auch ein Abnehmen des Trägers vom Halter sowie ein Abnehmen der Schutzabdeckung vom Träger erlauben, ohne dass auf umständliche Weise elektrische Kontakte gelöst und später wiederhergestellt werden müssten.

Bevorzugte Ausführungsformen der Erfindung sind auch in den abhängigen Ansprüchen angegeben.

Der Träger kann entweder von einem Spaltkeil gebildet oder zusätzlich zu einem Spaltkeil vorgesehen sein. Es ist erfindungsgemäß folglich möglich, aber nicht zwingend, einen Spaltkeil der Säge für die Integration des Leitungssystems zu nutzen. Je nach konkreter Ausgestaltung der Säge kann zusätzlich zu einem Spaltkeil ein separater Träger für die Schutzabdeckung vorgesehen sein. Darüber hinaus ist es auch möglich, beide Bauteile - also sowohl den Spaltkeil als auch einen zusätzlich vorgesehenen Träger für die Schutzabdeckung - für die Integration des elektrischen Leitungssystems zu nutzen.

Das erfindungsgemäße Leitungssystem braucht sich nicht über die gesamte Länge des Trägers zu erstrecken. Es genügt, wenn das Leitungssystem sich längs eines Teils des Trägers erstreckt. Die Integration des Leitungssystems in den Träger sorgt dafür, dass die in die Schutzabdeckung integrierte Funktionseinheit mit dem Bereich unterhalb der Arbeitsfläche verbunden werden kann, d.h. das Leitungssystem erstreckt sich zumindest entlang eines Abschnitts des Trägers, der von unterhalb der Arbeitsfläche nach oberhalb der Arbeitsfläche reicht.

Erfindungsgemäß ist in dem Träger für das Leitungssystem eine Vertiefung ausgebildet, in der das Leitungssystem untergebracht ist. Die Vertiefung kann lediglich an einer Seite des Trägers ausgebildet sein. Alternativ ist es möglich, mehrere Vertiefungen an verschiedenen Seiten des Trägers auszubilden. So können beispielsweise zwei Vertiefungen für das Leitungssystem an einander gegenüberliegenden Trägerseiten vorhanden sein.

Vorzugsweise ist die Vertiefung als eine Nut ausgebildet. Bevorzugt handelt es sich hierbei um eine flache Nut, deren Breite ein Mehrfaches der Nuttiefe beträgt. Bevorzugt ist vorgesehen, dass die Vertiefung durch einen Fräsvorgang hergestellt worden ist. Eine derartige Fräsbearbeitung ermöglicht einen vergleichsweise einfachen und kostengünstigen Herstellungsvorgang.

Vorzugsweise ist der Träger als ein Flachteil ausgebildet, wobei die Vertiefung in einer Flachseite des Trägers ausgebildet ist.

Gemäß einer weiteren Ausführungsform ist vorgesehen, dass das in der Vertiefung untergebrachte Leitungssystem mit der Außenseite des Trägers bündig abschließt oder gegenüber der Außenseite zurückspringt. Das Leitungssystem ist hierdurch vor äußeren mechanischen Einflüssen gut geschützt, ohne dass zusätzliche Maßnahmen zur Abdeckung oder Einkapselung des Leitungssystems getroffen werden müssten.

Das Leitungssystem kann in einem weiteren Ausführungsbeispiel mehrere parallel verlaufende, gegeneinander isolierte Einzelleitungen umfassen.

In einer bevorzugten Ausgestaltung ist vorgesehen, dass das Leitungssystem zumindest eine Leiterbahn umfasst. Vorzugsweise sind mehrere parallel verlaufende, gegeneinander isolierte Leiterbahnen vorgesehen. Durch die Verwendung einer oder mehrerer Leiterbahnen wird der Platzbedarf für das Leitungssystem minimiert.

Gemäß einem weiteren Ausführungsbeispiel der Erfindung ist das Leitungssystem ein separat von dem Träger hergestelltes Bauteil, das nach seiner Herstellung in den Träger integriert worden ist. Die Herstellung des Trägers der Säge, insbesondere des Spaltkeils, gestaltet sich hierdurch besonders einfache. Zudem kann ein separat gefertigtes Leitungssystem, welches nur noch montiert zu werden braucht, besonders kostengünstig von hierauf spezialisierten Herstellern bezogen werden.

Vorzugsweise ist das Leitungssystem im noch nicht in den Träger integrierten Zustand flexibel ausgebildet. Hierbei ist insbesondere von Vorteil, dass das Leitungssystem keine hohe Eigensteifigkeit zu besitzen braucht. Es kann dadurch mit einer sehr geringen Dicke hergestellt werden, so dass am oder im Träger nur sehr wenig Bauraum, insbesondere nur eine sehr flache Aufnahmenut, erforderlich ist, um das flexible Leitungssystem in den Träger zu integrieren. Im integrierten Zustand ist das flexible Leitungssystem aufgrund der von dem Träger selbst bereitgestellten Steifigkeit vor Verformungen geschützt.

Gemäß einer Ausführungsform kann das Leitungssystem einen Mehrschichtaufbau aufweisen, der zumindest eine elektrisch isolierende Trägerschicht und wenigstens eine auf die Trägerschicht aufgebrachte Leiterbahn umfasst.

Dabei kann der Mehrschichtaufbau zusätzlich eine Befestigungsschicht aufweisen, bevorzugt eine Klebeschicht, welche auf der der Leiterbahn gegenüberliegenden Seite der Trägerschicht vorgesehen und mittels welcher das Leitungssystem an dem Träger befestigt ist. Eine zusätzliche Befestigungsschicht, insbesondere in Form einer Klebeschicht, ermöglicht eine einfache und sichere Montage des Leitungssystems am Träger.

Die Leiterbahn kann zumindest bereichsweise, insbesondere in wenigstens einem Kontaktbereich, mit einer Oberflächenbearbeitung versehen sein. Bei dieser Oberflächenbearbeitung kann es sich vorzugsweise um eine Vergoldung handeln. Das Entstehen nachteiliger Oxidschichten auf der Leiterbahn kann auf diese Weise zuverlässig verhindert werden.

Vorzugsweise ist der Träger aus Metall hergestellt, wobei das Leitungssystem gegenüber dem Träger elektrisch isoliert ist. Die elektrische Isolation kann z.B. durch eine Trägerschicht eines Mehrschichtaufbaus des Leitungssystems gewährleistet werden.

Erfindungsgemäß ist am Träger wenigstens ein Kontaktbereich für das Leitungssystem vorgesehen, über den das Leitungssystem an einen nicht zum Träger gehörenden Gegenkontakt angeschlossen ist. Dabei wird vorzugsweise der Kontaktbereich von dem Leitungssystem und insbesondere von einem Bereich zumindest einer Leiterbahn des Leitungssystems gebildet. Der Kontaktbereich kann mehrere Einzelkontakte aufweisen, insbesondere einen Kontaktbereich für jede Einzelleitung, z.B. für jede einzelne Leiterbahn.

Bevorzugt sind am Träger zwei Kontaktbereiche vorgesehen, die zwei Gegenkontakten zugeordnet sind, welche sich auf unterschiedlichen Seiten der Arbeitsfläche befinden. Dabei kann jeder Kontaktbereich eine Mehrzahl von Einzelkontakten aufweisen, denen jeweils ein Einzelgegenkontakt des jeweiligen, nicht zum Träger gehörenden Gegenkontaktes zugeordnet ist.

Ein Gegenkontakt kann an der Schutzabdeckung angeordnet und mit der in die Schutzabdeckung integrierten Funktionseinheit verbunden sein.

Alternativ oder zusätzlich kann ein Gegenkontakt unterhalb der Arbeitsfläche angeordnet und mit der Basiseinheit verbunden sein.

In einer bevorzugten Ausgestaltung ist die elektrische Verbindung zwischen dem oder jedem Kontaktbereich und dem bzw. dem zugeordneten Gegenkontakt lösbar. Hierdurch kann erreicht werden, dass zum Beispiel der Träger auf einfache Weise von dem Halter oder die Schutzabdeckung auf einfache Weise von dem Träger abgenommen und gleichzeitig die elektrische Verbindung gelöst werden kann.

In einer weiteren bevorzugten Ausgestaltung kann zwischen dem Träger und dem oder jedem Gegenkontakt eine mechanische Verbindung vorgesehen sein, wobei diese mechanische Verbindung lösbar ist.

Das Leitungssystem kann mehrere parallel verlaufende, gegeneinander isolierte Einzelleitungen umfassen, insbesondere einzelne Leiterbahnen, wobei die Einzelleitungen jeweils zumindest einen Kontaktbereich aufweisen, wobei die Kontaktbereiche der Einzelleitungen in räumlicher Nähe zueinander angeordnet und gleichzeitig mit jeweiligen Gegenkontakten verbindbar sind.

In einer besonders bevorzugten Ausgestaltung der Erfindung ist der Träger mit dem Kontaktbereich in den Gegenkontakt eingesteckt oder auf den Gegenkontakt aufgeschoben. Eine solche Art der Verbindung ermöglicht es, dass auf besonders einfache und zuverlässige Weise die elektrische Kontaktierung gleichzeitig mit einer mechanischen Verbindung zwischen dem Träger und einem den Gegenkontakt aufweisenden Bauteil hergestellt werden kann.

Erfindungsgemäß umfasst der Gegenkontakt einen Schleifkontakt. Ein Schleifkontakt ermöglicht es, die beiden Bauteile relativ zueinander zu verstellen, ohne dabei die elektrische Kontaktierung zu lösen. Besonders vorteilhaft ist diese Art der Kontaktierung dann, wenn gemäß einer bevorzugten Ausführungsform der Erfindung das Leitungssystem eine oder mehrere Leiterbahnen umfasst.

Generell kann erfindungsgemäß vorgesehen sein, dass die elektrische Verbindung zwischen dem oder jedem Kontaktbereich und dem bzw. dem betreffenden Gegenkontakt jeweils derart ausgebildet ist, dass diese elektrische Verbindung ein mechanisches Verstellen zwischen Kontaktbereich und Gegenkontakt unter Aufrechterhaltung der Wirksamkeit der elektrischen Kontaktierung erlaubt.

Eine solche elektrische Verbindung kann insbesondere durch Zusammenwirken einer oder mehrerer Leiterbahnen jeweils mit einem Schleifkontakt realisiert werden. Diese Art der Kontaktierung stellt eine bevorzugte Ausgestaltung der Erfindung dar.

Gemäß einem weiteren Ausführungsbeispiel der Erfindung ist der Träger gemeinsam mit der Schutzabdeckung relativ zum Halter in der Höhe relativ zur Arbeitsfläche verstellbar.

Die Schutzabdeckung kann relativ zum Träger verstellbar sein. Es ist auch eine alternative Ausgestaltung möglich, bei welcher die Schutzabdeckung nicht relativ zum Träger verstellbar ist.

Vorzugsweise ist die Schutzabdeckung von dem Träger abnehmbar.

In einer bevorzugten Ausführungsform ist in der Arbeitsfläche für den Träger eine, insbesondere schlitzförmig ausgebildete, Durchtrittsöffnung ausgebildet, durch die der Träger über die Arbeitsfläche hinaus nach oben vorsteht, wobei der Träger durch die Durchtrittsöffnung hindurch nach oben entnehmbar ist.

Ein solches Entnahmekonzept ist aufgrund der erfindungsgemäßen Integration des elektrischen Leitungssystems in den Träger problemlos möglich, ohne dass wie auch immer geartete zusätzliche Vorbereitungsmaßnahmen zum Entnehmen des Trägers erforderlich wären. Vorzugsweise wird dies dadurch erreicht, dass eine mechanische Steckverbindung und eine elektrische Schleifkontaktierung zwischen Träger und Halter vorgesehen sind.

Die in die Schutzabdeckung integrierte Funktionseinheit kann wenigstens zwei unterschiedliche Funktionsmodule umfassen. Dabei kann das eine Funktionsmodul ein Sensormodul sein, welches Messsignale an die Basiseinheit übermittelt, auf deren Grundlage die Basiseinheit Steuersignale an das andere Funktionsmodul übermittelt.

Bevorzugt ist die Basiseinheit zu einer bidirektionalen Kommunikation mit der Funktionseinheit über das Leitungssystem ausgebildet.

Die Basiseinheit kann dazu ausgebildet sein, über zumindest eine Leitung des Leitungssystems die Funktionseinheit mit Strom zu versorgen und über dieselbe Leitung eine unidirektionale oder bidirektionale Kommunikation mit der Funktionseinheit zu führen.

Die unterhalb der Arbeitsfläche angeordnete Basiseinheit für die Funktionseinheit kann ein Netzteil zur Stromversorgung der Funktionseinheit sowie ein Steuergerät zur Kommunikation mit der Funktionseinheit umfassen.

Gemäß einem weiteren Ausführungsbeispiel der Erfindung ist vorgesehen, dass innerhalb der Schutzabdeckung ein von einem Eintrittsbereich zu einem Austrittsbereich führender Strömungsweg für während des Sägebetriebs entstehende Sägespäne ausgebildet ist. Dabei ist in der Schutzabdeckung für zumindest ein Bauteil der Funktionseinheit eine von dem Strömungsweg abgetrennte Schutzkammer und/oder eine im Strömungsweg gelegene, zumindest zum Teil quer oder schräg zur Strömungsrichtung verlaufende Schutzwand und/oder ein im Strömungsweg gelegener Schutzvorsprung vorgesehen.

Auf diese Weise können Bauteile der Funktionseinheit in der Schutzabdeckung untergebracht werden, ohne dass die Gefahr besteht, dass diese Bauteile durch die sich vom Eintrittsbereich zum Austrittsbereich bewegenden Sägespäne in ihrer Funktion beeinträchtigt oder beschädigt werden.

In einer Schutzkammer kann beispielsweise ein Gegenkontakt für das in den Träger integrierte Leitungssystem oder ein Funktionsmodul der Funktionseinheit angeordnet sein. Die Schutzabdeckung kann auch mehrere Schutzkammern aufweisen, beispielsweise eine für einen Gegenkontakt und eine für ein Funktionsmodul, z.B. ein Lichtmodul.

Eine Anschlussleitung der Funktionseinheit kann beispielsweise entlang einer stromabwärts gelegenen Rückseite einer Schutzwand oder eines Schutzvorsprungs durch den Strömungsweg geführt werden.

Insbesondere kann eine Schutzwand oder ein Schutzvorsprung, die bzw. der innerhalb der Schutzabdeckung in einem Strömungsweg für Sägespäne gelegen ist, ein strömungsgünstig geformtes Querschnittsprofil aufweisen.

Was die mechanische Verbindung zwischen Schutzabdeckung und Träger anbetrifft, so ist vorzugsweise die Schutzabdeckung an den Träger durch Klemmung befestigbar.

Dabei kann in die Schutzabdeckung eine Schraubklemme für den Träger integriert sein. Vorzugsweise umfasst die Schraubklemme zwei einstückig mit der Schutzabdeckung, z.B. jeweils mit einer Teil- oder Halbschale der Schutzabdeckung, ausgebildete Klemmabschnitte, zwischen denen der Träger einklemmbar ist, eine um eine Drehachse drehbare Betätigungsmutter, einen integral an dem einen Klemmabschnitt ausgebildeten, um die Drehachse umlaufenden Gewindeabschnitt, der mittels der Betätigungsmutter beaufschlagbar ist, um die Schraubklemme zu schließen oder zu öffnen, d.h. um die beiden Klemmabschnitte zu verspannen oder zu lösen, und ein den anderen Klemmabschnitt und die Betätigungsmutter in einem vorgegebenen axialen Abstand haltendes Verbindungsorgan.

Bevorzugt sind die Klemmabschnitte mittels eines Federelementes in Schließrichtung vorgespannt, d.h. in Richtung eines Zusammendrückens der beiden Klemmabschnitte, wobei die Betätigungsmutter gegen die Rückstellkraft des Federelements verdrehbar ist, um die Schraubklemme zu öffnen.

Vorzugsweise ist der Gewindeabschnitt über einen Winkelbereich von weniger als 180° wirksam. Dies ermöglicht es, zwei einander diametral gegenüberliegende Gewindeabschnitte vorzusehen.

Bevorzugt ist der Gewindeabschnitt als eine Auflaufschräge für zumindest einen Steuerabschnitt der Betätigungsmutter ausgebildet. Bevorzugt weist die Betätigungsmutter zwei einander diametral gegenüberliegende Steuerabschnitte auf, die jeweils einen von zwei Teilabschnitten des Gewindeabschnitts beaufschlagen.

Vorzugsweise ist der Träger in die Schraubklemme einsteckbar.

Der Träger kann mit einer Aussparung versehen sein, mit welcher der Träger auf ein Bauteil einer in die Schutzabdeckung integrierten Klemmeinrichtung für den Träger aufsteckbar ist.

Bevorzugt ist die Aussparung des Trägers derart ausgebildet, dass der Träger in einem Nichtbenutzungszustand an einem Halter der Säge aufhängbar ist.

Gemäß einer weiteren bevorzugten Ausgestaltung der Erfindung umfasst die Schutzabdeckung eine vor einem Eingriff in das Sägeblatt von oben schützende Schutzhaube sowie einen vor einem seitlichen Eingriff in das Sägeblatt schützenden Seitenschutz, der an der Schutzhaube mittels eines Kugellagers, z.B. eines Rillenkugellagers, verschwenkbar gelagert ist. Anstelle eines Kugellagers kann grundsätzlich auch eine Gleitbuchsenlagerung eingesetzt werden.

Bevorzugt umfasst der Seitenschutz zwei jeweils an einer der beiden Seiten der Schutzhaube angebrachte Seitenschutzelemente.

Bevorzugt ist das Kugellager in den Seitenschutz fest eingebaut und/oder verliersicher angebracht, insbesondere durch Umspritzen. Wenn eine Gleitbuchsenlagerung vorgesehen ist, dann kann diese eine separate Gleitbuchse umfassen, die an der Schutzhaube befestigt und derart ausgebildet ist, dass der Seitenschutz auf der Gleitbuchse verliersicher gehalten und klemmfrei verschwenkbar ist.

Die Schutzhaube kann an dem Träger, insbesondere lösbar, befestigt sein, wobei bevorzugt die Schutzhaube im am Träger befestigten Zustand nicht relativ zum Träger verstellbar ist.

Eine Beobachtung des Arbeitsbereiches, in welchem das während des Betriebs rotierende Sägeblatt wirksam ist, für eine Benutzer der Säge wird durch eine weitere bevorzugte Ausgestaltung der Erfindung ermöglicht, bei welcher der Seitenschutz zumindest eine von Schutzstreben durchsetzte Sichtöffnung aufweist, wobei die Schutzstreben schräggestellt sind, um eine Sicht auf das Sägeblatt von schräg vorne zu ermöglichen. Die Schutzstreben können dabei ausreichend eng und insbesondere einschlägigen Sicherheitsvorschriften entsprechend voneinander beabstandet sein, um einen versehentlichen Eingriff mittels eines Fingers sicher zu verhindern, und gleichzeitig aufgrund der Schrägstellung eine gute Sicht auf den Arbeitsbereich ermöglichen.

Die Erfindung wird im Folgenden beispielhaft unter Bezugnahme auf die Zeichnung beschrieben. Es zeigen:
- Fig. 1: eine perspektivische Ansicht einer erfindungsgemäßen Unterflur-Zugsäge mit betriebsbereit angebrachter Einheit aus Spaltkeil und Schutzabdeckung,
- Fig. 2: eine andere perspektivische Ansicht der Säge von Fig. 1, wobei sich Spaltkeil und Schutzabdeckung in einer Aufbewahrungsposition am Gestell der Säge befinden,
- Fig. 3: die Anordnung aus Schutzabdeckung, Spaltkeil und Halter für den Spaltkeil der Säge von Fig. 1 im zusammengesetzten Zustand,
- Fig. 4: eine Ansicht des Spaltkeils der erfindungsgemäßen Säge,
- Fig. 5a und 5b: weitere Darstellungen des Spaltkeils, insbesondere zur Veranschaulichung des in den Spaltkeil integrierten elektrischen Leitungssystems,
- Fig. 6: eine Teilansicht des Inneren der Schutzabdeckung der Säge von Fig. 1,
- Fig. 7: einen Teil des Halters für den Spaltkeil,
- Fig. 8 und 9: verschiedene Ansichten des noch nicht vollständig am Halter angebrachten Spaltkeils,
- Fig. 10: die Anordnung aus Schutzabdeckung und Spaltkeil im zusammengesetzten Zustand,
- Fig. 11: eine Ansicht entlang der Schnittlinie A-A in Fig. 10,
- Fig. 12: einen Teil von Fig. 11 in vergrößerter Darstellung,
- Fig. 13: eine Ansicht auf die Innenseite einer Teilschale der Schutzabdeckung,
- Fig. 14: eine Ansicht gemäß Fig. 13 mit an der Schutzabdeckung und am Halter angebrachtem Spaltkeil,
- Fig. 15: eine Darstellung entsprechend Fig. 6 zur Erläuterung weiterer erfindungsgemäßer Aspekte, und
- Fig. 16: den Aufbau der Schutzabdeckung aus Schutzhaube und Seitenschutzelementen.

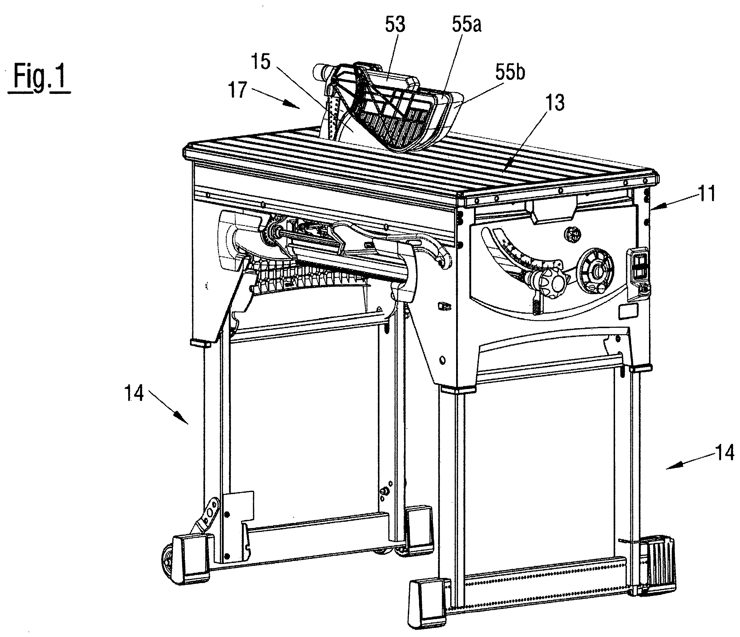

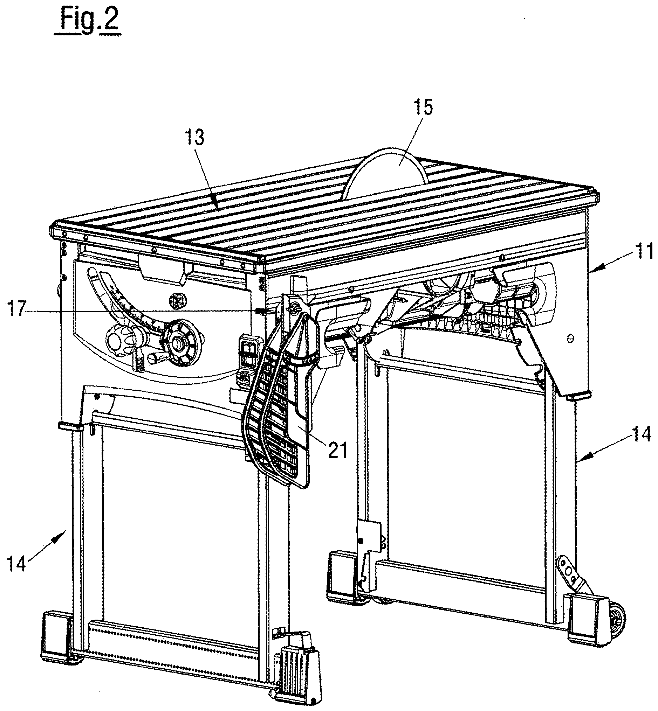

Die Fig. 1 und 2 zeigen eine Unterflur-Zugsäge, wie sie hinsichtlich ihres grundlegenden Aufbaus bekannt ist. Die Säge umfasst einen Tisch mit einem Gestell 11 und zwei Beinen 14, die zwischen der dargestellten ausgeklappten Arbeitsstellung und einer eingeklappten Transportstellung relativ zum Gestell 11 verschwenkt werden können.

Bei einer derartigen Unterflur-Zugsäge braucht nicht das Werkstück durch das Sägeblatt 15 hindurch bewegt zu werden, sondern es wird umgekehrt die gesamte Arbeitseinheit, die u.a. das Sägeblatt 15 und einen innerhalb des Gestells unter der Arbeitsfläche 13 gelegenen Antrieb umfasst, durch das auf der Arbeitsfläche 13 aufliegende Werkstück hindurch bewegt. In der Arbeitsfläche 13 ist hierzu eine schlitzförmige Öffnung für das Sägeblatt 15 vorgesehen. Die Bedienung der Säge, nämlich das Bewegen der Arbeitseinheit in Sägerichtung sowie das Verschwenken der Arbeitseinheit, um das Sägeblatt 15 für das Ausführen von Schrägschnitten relativ zur Arbeitsfläche 13 zu neigen, kann der Benutzer an einer der Stirnseiten der Säge vornehmen, wo die entsprechenden Handhabungen zugänglich sind.

Ein sich ebenfalls durch die erwähnte Schlitzöffnung erstreckender schmaler Spaltkeil 17 trägt eine Schutzabdeckung 21 und stellt somit einen Träger im Sinne der vorliegenden Erfindung dar. Die Schutzabdeckung 21 umfasst eine vor einem Eingriff in das Sägeblatt 15 von oben schützende Schutzhaube 53 sowie vor einem seitlichen Eingriff schützende Seitenschutzelemente 55a, 55b, die - ähnlich wie angelegte Flügel - an die Schutzhaube 53 frei beweglich angelenkt sind und somit schwerkraftbedingt auf der Arbeitsfläche 13 aufliegen, wenn - wie in Fig. 1 - kein Werkstück vorhanden ist.

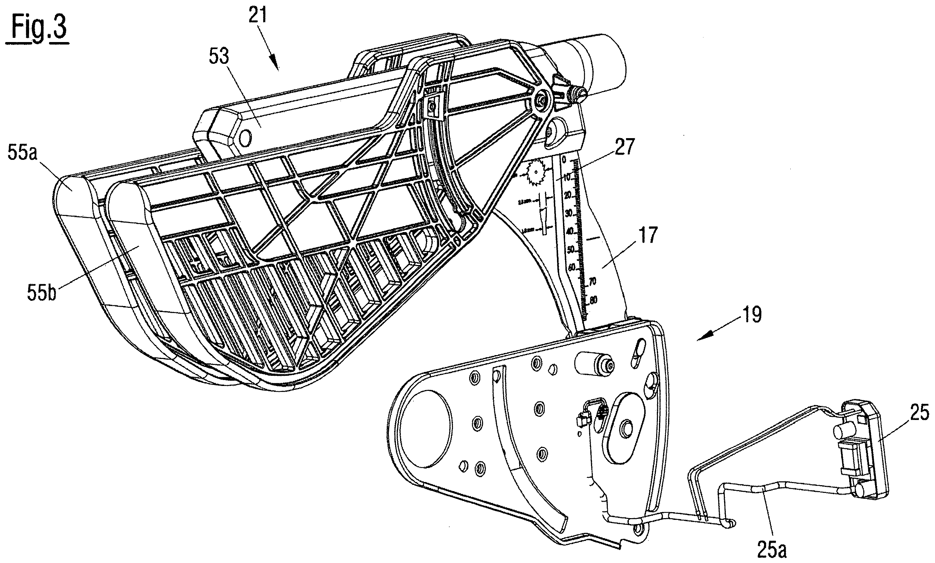

Der Antrieb für das Sägeblatt 15 sowie der Spaltkeil 17 sind an einer gemeinsamen Halterung abgestützt, die sich unterhalb der Arbeitsfläche 13 befindet. Ein in Fig. 1 und 2 nicht dargestellter Halter 19 (vgl. Fig. 3) für den Spaltkeil 17, auf den nachstehend näher eingegangen wird, kann bei Schwenkbewegungen gemeinsam mit dem Sägeblatt 15 bzw. dessen Antriebseinheit und bei einer Höhenverstellung zum Einstellen der Schnitttiefe entweder unabhängig von oder in geeigneter Weise zwangsgeführt mit der Verstellbewegung des Sägeblatts 15 bewegt werden. Hierdurch ist sichergestellt, dass in jeder Stellung des Sägeblatts 15 relativ zur Arbeitsfläche 13 eine jeweils vorgeschriebene Schutzwirkung der Schutzabdeckung 21 gegeben ist.

Der Spaltkeil 17 kann einfach durch Abziehen von seinem Halter 19 abgenommen und nach oben aus der erwähnten Schlitzöffnung entfernt werden. Auch zwischen Schutzhaube 53 und Spaltkeil 17 ist eine - zusätzlich durch eine an anderer Stelle näher beschriebenen Klemmeinrichtung gesicherte - Steckverbindung vorgesehen, die einfach gelöst werden kann, um die Schutzhaube 53 und somit die gesamte Schutzabdeckung 21 vom Spaltkeil 17 abnehmen zu können.

Der Spaltkeil 17 und die Schutzabdeckung 21 können - wie Fig. 2 zeigt - bei Nichtgebrauch an einen seitlich am Gestell 11 angebrachten Haken gehängt werden. In dieser Konfiguration können z.B. sogenannte Einsetzschnitte oder verdeckte Schnitte ausgeführt werden, bei denen das Sägeblatt 15 lediglich in die Unterseite eines auf der Arbeitsfläche 13 aufliegenden Werkstücks einschneidet, das Werkstück aber nicht durchtrennt.

Fig. 3 zeigt lediglich die Anordnung aus Schutzabdeckung 21, Spaltkeil 17 und Halter 19, in den der Spaltkeil 17 an der hier abgewandten Seite des Halters 19 eingeschoben ist.

Eine Besonderheit der Erfindung besteht darin, dass in die Schutzhaube 53 eine an anderer Stelle dargestellte, ein Lichtmodul umfassende Funktionseinheit integriert ist. Die Stromversorgung des Lichtmoduls erfolgt durch ein im Gestell 11 unterhalb der Arbeitsfläche 13 angeordnetes Netzteil 25, das insofern als Basiseinheit für die in die Schutzhaube 53 integrierte Funktionseinheit dient. Eine Versorgungsleitung 25a in Form einer Anschlussleitung führt vom Netzteil 25 zum Halter 19, an welchem in nachstehend näher beschriebener Weise ein in den Spaltkeil 17 integriertes elektrisches Leitungssystem 27 kontaktiert wird. Auch die Schutzhaube 53 ist mit einem nachstehend näher erläuterten Kontaktmodul 24 versehen, mit dem die Kontaktierung des Leitungssystems 27 des Spaltkeils 17 erfolgt, um auf diese Weise eine elektrische Verbindung zwischen dem Netzteil 25 unter der Arbeitsfläche 13 einerseits und dem in der Schutzhaube 53 angeordneten und somit oberhalb der Arbeitsfläche 13 befindlichen Lichtmodul andererseits herzustellen.

Durch die erfindungsgemäße Integration des Leitungssystems 27 in den Spaltkeil 17 wird dieser als Weg für das Leitungssystem 27 genutzt. Der Spaltkeil 17 ist also nicht selbst Teil eines elektrischen Leiters, sondern dient vielmehr dazu, diesen aufzunehmen. Das Vorhandensein des Spaltkeils 17 und insbesondere dessen mechanische Stabilität werden erfindungsgemäß genutzt, um auf einfache und zuverlässige Weise eine elektrische Verbindung zwischen einem Ort unterhalb der Arbeitsfläche und einem Ort an oder in der oberhalb der Arbeitsfläche befindlichen Schutzabdeckung herstellen zu können.

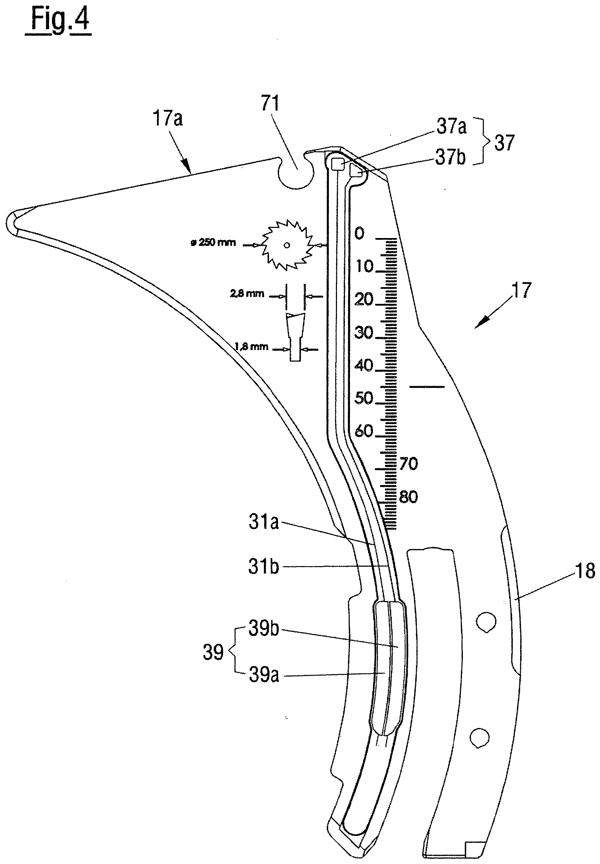

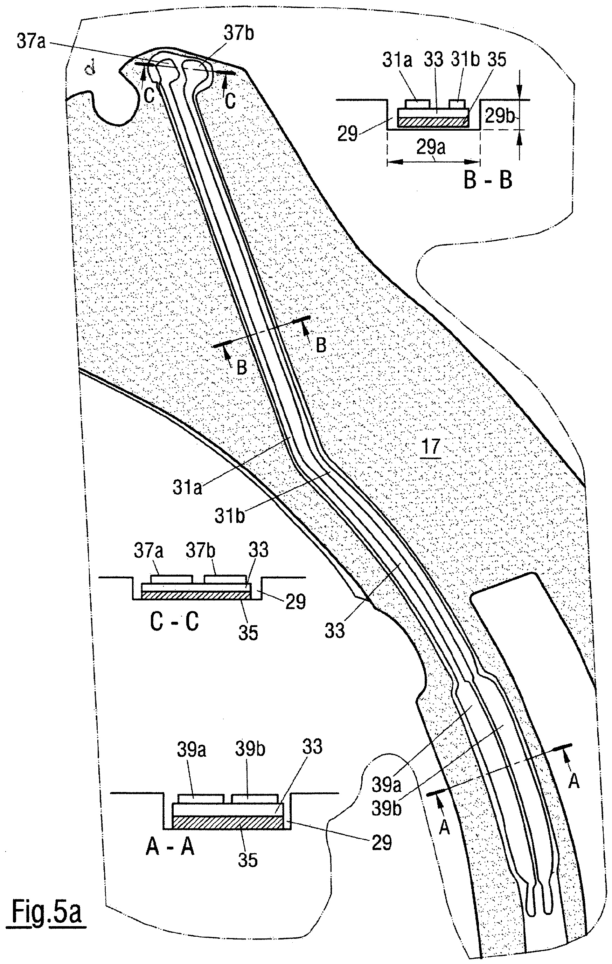

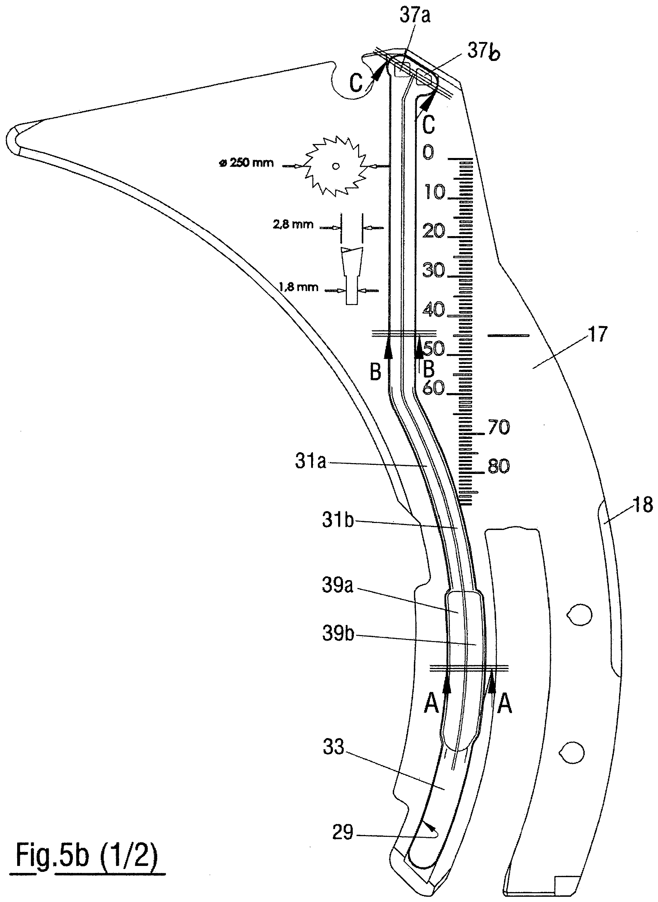

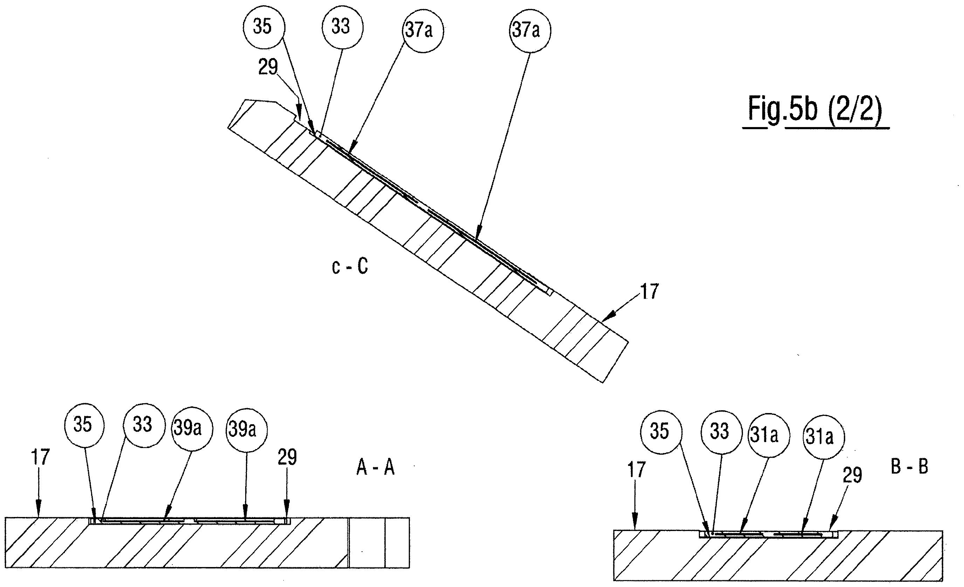

Die Fig. 4 und die Fig. 5a und 5b mit den einzelnen Schnittdarstellungen zeigen ein Ausführungsbeispiel eines erfindungsgemäß mit einem elektrischen Leitungssystem 27 versehenen Spaltkeils 17, wobei die Schnittdarstellungen in Fig. 5a schematisch und in Fig. 5b maßstabsgerecht dargestellt sind.

Der Spaltkeil 17 ist aus Metall hergestellt und an einer seiner Flachseiten mit einer flachen Nut 29 versehen, die durch einen Fräsvorgang hergestellt worden ist. Die Nuttiefe 29b beträgt weniger als 1 mm, beispielsweise 0,3 bis 0,4 mm.

Das Leitungssystem 27 ist eine separat vom Spaltkeil 17 hergestellte Komponente, die einen für sich genommen biegsamen Mehrschichtaufbau besitzt. Unterhalb einer elektrisch isolierenden Trägerschicht 33 befindet sich eine Klebeschicht 35. Auf die Trägerschicht 33 sind in dem hier dargestellten Ausführungsbeispiel zwei jeweils eine Einzelleitung bildende Leiterbahnen 31a, 31b aufgebracht. Durch eine nicht dargestellte Vergoldung sind die Leiterbahnen 31a, 31b vor äußeren Einflüssen geschützt. Dieser Mehrschichtaufbau ist derart dünn, dass er in die flache Nut 29 des Spaltkeils 17 ohne Überstand eingeklebt werden kann, d.h. die Leiterbahnen 31a, 31b schließen bündig mit der Flachseite des Spaltkeils 17 ab oder springen sogar etwas zurück.

Am in Fig. 4 und 5 oberen, mit der Schutzhaube 53 zu verbindenden Endbereich des Spaltkeils 17 enden die Leiterbahnen 31a, 31b jeweils als erweiterter Einzelkontakt 37a, 37b, die zusammen einen oberen Kontaktbereich 37 bilden. In einem unteren Bereich des Spaltkeils 17 bilden die Leiterbahnen 31a, 31b jeweils einen verbreiterten, langgestreckten Einzelkontakt 29a, 29b, die zusammen einen unteren Kontaktbereich 39 des Spaltkeils 17 definieren.

In diesen Kontaktbereichen 37, 39 ist die Aufnahmenut 29 jeweils entsprechend verbreitert. In dem Bereich zwischen den Kontaktbereichen 37, 39 besitzt die Aufnahmenut 29 des Spaltkeils beispielsweise eine Breite 29a von etwa 6,5mm, wobei die Breite z.B. in einem Bereich von 6 bis 10mm liegen kann. In Abhängigkeit von einer jeweiligen Anwendung kann die Breite auch kleiner als 6mm sein.

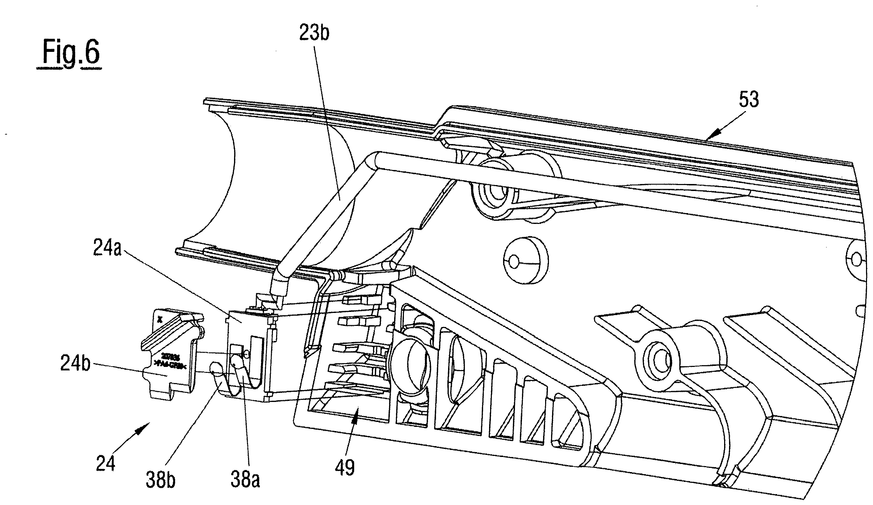

Für den oberen Kontaktbereich 37 des Spaltkeils 17 ist in die Schutzhaube 53 ein Kontaktmodul 24 integriert (vgl. Fig. 6), für welches in der einen Schale der aus zwei zusammengesetzten Teilschalen gebildeten Schutzhaube 33 eine Schutzkammer 49 ausgebildet ist. Das in dieser Schutzkammer 49 angeordnete Kontaktmodul 24 ist so vor durch die Schutzhaube 53 strömenden Sägespänen geschützt, worauf an anderer Stelle näher eingegangen wird.

Das Kontaktmodul 24 umfasst ein Trägerteil 24a, an welchem zwei gebogene Kontaktfedern angebracht sind, die Einzelgegenkontakte 38a, 38b für die oberen Einzelkontakte 37a, 37b (vgl. Fig. 4 und 5) des Spaltkeils 17 bilden. Ein Abdeckteil 24b dient als Niederhalter und Isolation für die Federkontakte 38a, 38b. Das Abdeckteil 24b wird auf das Trägerteil 24a unter Zwischenlage dieser Kontaktfedern 38a, 38b aufgesteckt. Das auf diese Weise zusammengesetzte Kontaktmodul 24 ist an seiner Unterseite offen, so dass der von den Einzelkontakten 37a, 37b gebildete obere Kontaktbereich 37 des Spaltkeils 17 eingesteckt werden kann. Die Kontaktierung zwischen Spaltkeil 17 und Schutzhaube 53 erfolgt somit nach dem Prinzip eines Schleifkontakts.

Mit dem Kontaktmodul 24 ist eine Anschlussleitung 23b verbunden, die in der Schutzhaube 53 verlegt ist und zu dem in Fig. 6 nicht dargestellten Lichtmodul führt.

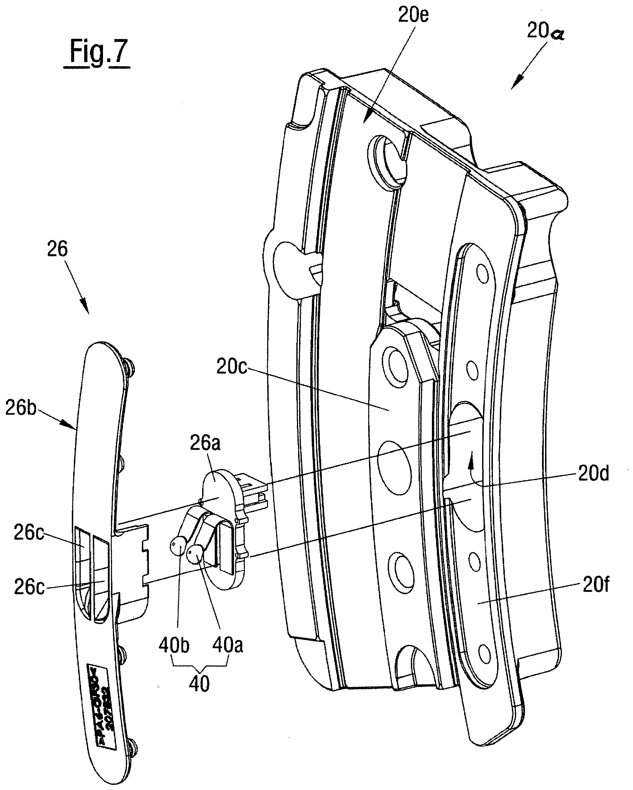

Auch die Kontaktierung zwischen dem unteren Kontaktbereich 39 des Spaltkeils 17, der von den langgestreckten Einzelkontakten 39a, 39b (vgl. 4 und 5) gebildet wird, und dem Halter 19 (vgl. Fig. 3) erfolgt nach dem Prinzip eines Schleifkontakts. Fig. 7 zeigt hierzu ein Zwischenteil 20a des Halters 19, das eine Steckführung 20e mit einem mittig angeordneten Steg 20c aufweist, der bei eingestecktem Spaltkeil 17 zwischen den beiden schmalen Endabschnitten des in diesem Endbereich gabelartig ausgebildeten Spaltkeils 17 angeordnet ist.

Auf einer Seite dieses Mittelstegs 20c ist im Zwischenteil 20a eine Aufnahme 20d für das Trägerteil 26a eines Kontaktmoduls 26 ausgebildet. Am Trägerteil 26a sind wie beim oberen Kontaktmodul 24 (vgl. Fig. 6) zwei gebogene Federkontakte angebracht, die Einzelgegenkontakte 40a, 40b für die unteren Einzelkontakte 39a, 39b des Spaltkeils 17 und somit einen Gegenkontakt 40 für den unteren Kontaktbereich 39 des Spaltkeils 17 bilden.

Im zusammengesetzten Zustand dieses Kontaktmoduls 26 ist wiederum ein Abdeckteil 26b auf das Trägerteil 26a gesteckt. Für das Abdeckteil 26b ist eine die Aufnahme 20d umgebende Vertiefung 20f im Zwischenteil 20a ausgebildet.

Anders als beim oberen Kontaktmodul 24 der Schutzhaube 53 (vgl. Fig. 6) ist das Kontaktmodul 26 des Halters 19 mit Durchbrüchen 26c versehen, durch welche im zusammengesetzten Zustand die beiden Federkontakte 40a, 40b über die zum eingeschobenen Spaltkeil 17 weisende Außenseite des Abdeckteils 26b hinaus vorstehen.

Bei ausreichend weit eingeschobenem Spaltkeil 17 stehen folglich die Kontaktfedern 40a, 40b jeweils in elektrisch leitendem Kontakt mit dem betreffenden Kontaktbereich 39a, 39b an der zugewandten Flachseite des einen schmalen Endabschnitts des Spaltkeils 17. Aufgrund der langgestreckten Form der spaltkeilseitigen Kontaktbereiche 39a, 39b kann - zur Höhenverstellung der vom Spaltkeil 17 getragenen Schutzhaube 53 - der Spaltkeil 17 unter Aufrechterhaltung der durch den beschriebenen Schleifkontakt hergestellten elektrischen Verbindung im Zwischenteil 20a verschoben werden.

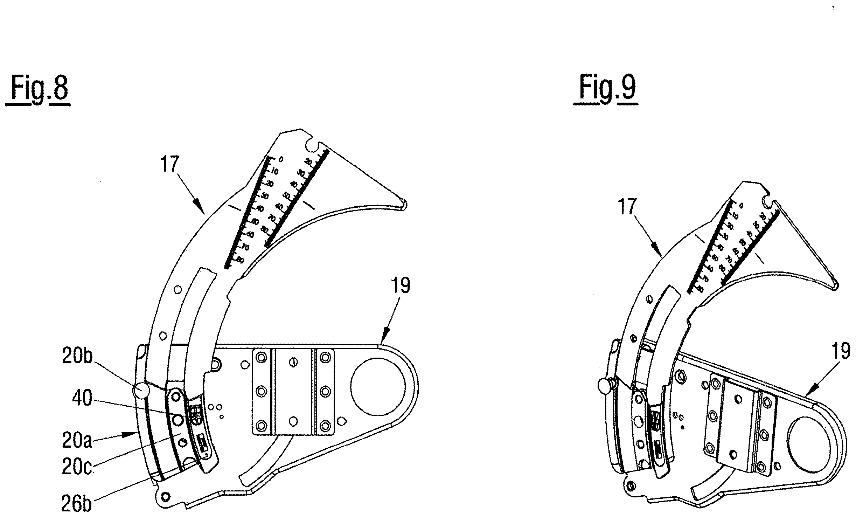

Die Fig. 8 und 9 zeigen die in Fig. 3 abgewandte Seite des Halters 19 mit nur teilweise in das Zwischenteil 20a eingestecktem, noch nicht kontaktiertem Spaltkeil 17. In diesem Zustand sind das Abdeckteil 26b und der von den vorstehend beschriebenen Kontaktfedern gebildete Gegenkontakt 40 zu erkennen, der auf der einen Seite des Mittelstegs 20c liegt. Auf der anderen Seite des Mittelstegs 20c ist am Zwischenteil 20a ein Rastknopf 20b ausgebildet, der mit einer außen am nicht für die elektrische Kontaktierung vorgesehenen schmalen Endabschnitt des Spaltkeils 17 ausgebildeten Rastnut 18 (vgl. Fig. 4) zusammenwirkt, sobald der Spaltkeil 17 weit genug eingeschoben ist. Die Enden der Rastnut 18 markieren die maximale und die minimale Einschubtiefe des Spaltkeils 17 am Halter 19 und zeigen somit dem Benutzer das Erreichen der tiefsten und höchsten Stellung des Spaltkeils 17 und somit der von diesem getragenen Schutzabdeckung 21 spürbar an.

Durch diese rastende Koppelung kann der Spaltkeil 17 auf einfache Weise und insbesondere werkzeuglos von oben durch die in der Arbeitsfläche 13 der Säge ausgebildete Schlitzöffnung hindurch eingesteckt und bei Nichtgebrauch nach oben abgezogen werden.

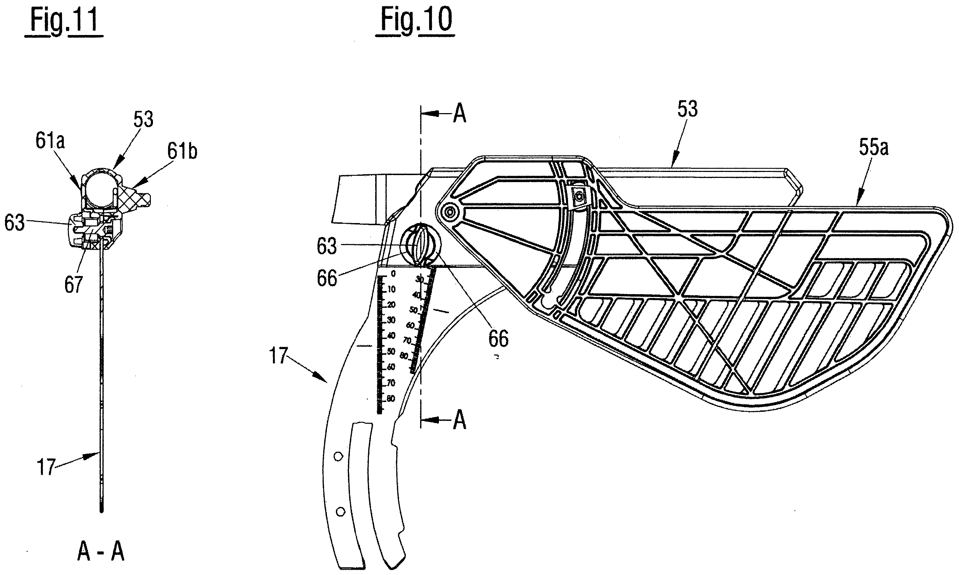

Die Fig. 10, 11 und 12 zeigen die mechanische Koppelung des Spaltkeils 17 an die Schutzhaube 53. Die flügelartigen Seitenschutzelemente 55a, die schwenkbar an der Schutzhaube 53 seitlich angebracht sind, sind sowohl von der mechanischen Koppelung des Spaltkeils 17 an die Schutzhaube 53 als auch von der elektrischen Kontaktierung zwischen Spaltkeil 17 und in der Schutzhaube 53 untergebrachtem Kontaktmodul 24 unabhängig.

Wie beispielsweise Fig. 4 zeigt, ist der Spaltkeil 17 an seinem oberen, geraden Ende benachbart dem von den Einzelkontakten 37a, 37b gebildeten oberen Kontaktbereich 37 mit einer Aussparung 71 versehen, die zur geraden Seite 17a des Spaltkeils 17 offen ist und sich ausgehend von dieser Öffnung im Wesentlichen kreisförmig erweitert. Diese Hinterschneidung ermöglicht es, den Spaltkeil 17 bei Nichtgebrauch an das Gestell 11 zu hängen, wie es in Fig. 2 gezeigt ist.

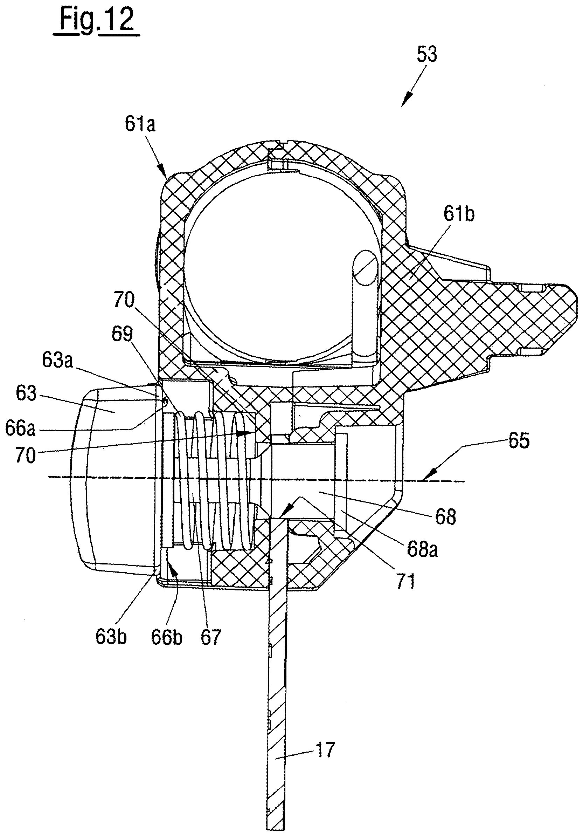

Außerdem dient die Aussparung 71 dazu, den Spaltkeil 17 in einer Schraubklemme zu positionieren, die unter anderem ein Verbindungsorgan 67 (vgl. insbesondere Fig. 12) aufweist, das sich bei mit der Schutzhaube 53 gekoppeltem Spaltkeil 17 durch die Aussparung 71 hindurch erstreckt.

Die erwähnte Schraubklemme umfasst außerdem zwei Klemmabschnitte 61a, 61b, die jeweils einstückig an einer der beiden Teilschalen der Schutzhaube 53 ausgebildet sind. Das mit seiner Längsachse senkrecht zum Spaltkeil 17 orientierte Verbindungsorgan 67 hintergreift mit einem an einem Kopf 68 ausgebildeten Flansch 68a den in Fig. 12 rechten Klemmabschnitt 61b, erstreckt sich durch die Aussparung 71 des Spaltkeils 17 und den anderen Klemmabschnitt 61a hindurch und ist an seinem freien Ende mit einer Betätigungsmutter 63 in axialer Richtung fest verbunden. Das Verbindungsorgan 67 samt Kopf 68 und Flansch 68a und die Betätigungsmutter 63 sind gemeinsam um eine Drehachse 65 verdrehbar. Die Betätigungsmutter 63 ist mit zwei einander diametral gegenüberliegenden Fortsätzen 63a, 63b versehen, die mit jeweils als Auflauframpe für den betreffenden Fortsatz ausgebildeten Gewindeabschnitten 66a, 66b zusammenwirken, um in Abhängigkeit von der Richtung einer Drehung der Betätigungsmutter 63 um die Drehachse 65, die mit der Längsachse des Verbindungsorgans 67 zusammenfällt, die Schraubklemme entweder zu öffnen oder zu schließen.

Anders als in Fig. 12 dargestellt kann z.B. bei entsprechender Drehstellung der Betätigungsmutter 63 durch die Druckfeder 69 die offene Stellung der Schraubklemme gewährleistet sein, in welcher der Spaltkeil 17 eingesteckt und herausgezogen werden kann. Durch Verdrehen der Betätigungsmutter 63 um einen Winkelbereich von ungefähr 90° können die beiden Klemmabschnitte 61a, 61b gegen die Rückstellkraft der Druckfeder 69 zusammengedrückt werden, um die Schraubklemme zu schließen.

Umgekehrt zu diesem grundsätzlich möglichen Prinzip sind bei der in Fig. 12 dargestellten Variante durch die Druckfeder 69 die beiden Klemmabschnitte 61a, 61b in Schließrichtung der Schraubklemme vorspannt, d.h. es ist die Druckfeder 69, welche die beiden Klemmabschnitte 61a, 61b zusammendrückt, indem sie die Betätigungsmutter 63 und damit den Flansch 68a am Kopf 68 in Fig. 12 nach links und somit den Klemmabschnitt 61b gegen den Klemmabschnitt 61a drückt, der von der Druckfeder 69 nach rechts gedrückt wird. Das Öffnen der Schraubklemme erfolgt dann durch Verdrehen der Betätigungsmutter 63 um einen Winkelbereich von ungefähr 90° und gleichzeitiges Bewegen der Betätigungsmutter 63 samt Verbindungsorgan 67 und somit Kopf 68 und Flansch 68a nach rechts in Fig. 12 und dabei gegen die Rückstellkraft der Druckfeder 69. Diese Bewegung nach rechts ist möglich, da bei Verdrehen der Betätigungsmutter 63 deren Fortsätze 63a, 63b auf den rampenartigen Gewindeabschnitten 66a, 66b nach unten, hier also nach rechts, gelangen können.

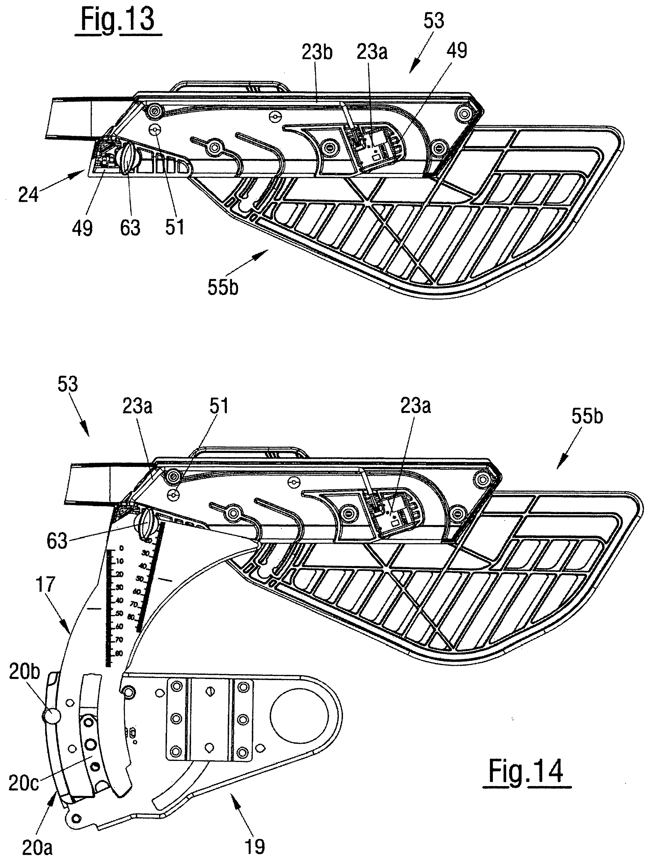

Wie Fig. 13 zeigt, ist das in diesem Ausführungsbeispiel ein Funktionsmodul 23a der Funktionseinheit 23 bildende Lichtmodul im vorderen Bereich der Schutzhaube 53 angeordnet, von der hier die offene Seite der einen Teilschale dargestellt ist. Die Anschlussleitung 23b verbindet das Lichtmodul 23a mit dem im hinteren Bereich angeordneten Kontaktmodul 24. Benachbart dem Kontaktmodul 24 befindet sich die vorstehend erläuterte Schraubklemme, von der hier die Betätigungsmutter 63 dargestellt ist.

Sowohl das Kontaktmodul 24 als auch das Lichtmodul 23a sind jeweils in einer Schutzkammer 49 der Schutzhaube 53 angeordnet.

Fig. 14 zeigt die Schutzhaube 53 im auf den Spaltkeil 17 gesteckten Zustand. Der Spaltkeil 17 ist so weit in das Zwischenteil 20a des Halters 19 eingeschoben, dass der Rastknopf 20b mit dem einen schmalen Endabschnitt des gabelförmigen unteren Endes des Spaltkeils 17, nämlich mit der in Fig. 4 gezeigten Rastnut 18, zusammenwirken kann. Der andere schmale Endabschnitt ist mit dem in Fig. 8 und 9 gezeigten Kontaktmodul 40 des Halters 19 elektrisch leitend verbunden. Der Mittelsteg 20c befindet sich zwischen den beiden schmalen Endabschnitten des Spaltkeils 17.

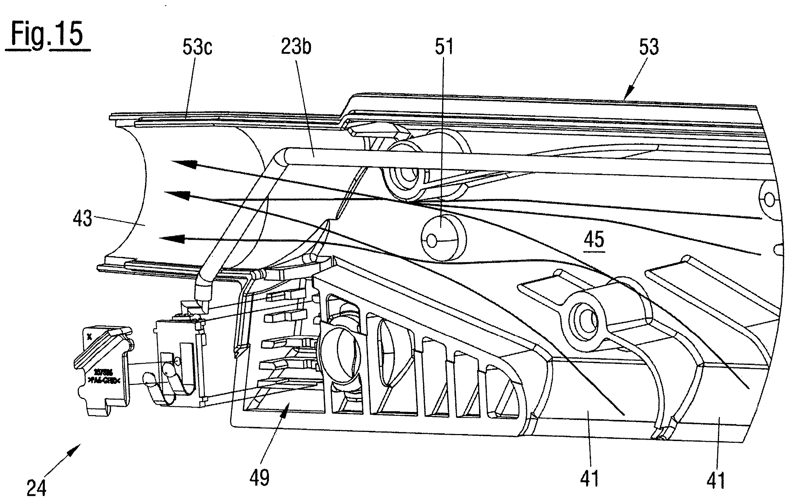

Wie Fig. 15 veranschaulicht, kann an die Schutzhaube 53 eine Saugeinrichtung angeschlossen werden, und zwar an einen im hinteren Bereich ausgebildeten Anschlussstutzen 53a, der einen Austrittsbereich für über einen unteren Eintrittsbereich 41 angesaugte Späne bildet. Zwischen dem Eintrittsbereich 41 und dem Austrittsbereich 43 verläuft folglich ein Strömungsweg 45 durch die Schutzhaube 53 hindurch. Sowohl das Kontaktmodul 24 als auch das Lichtmodul 23a (vgl. Fig. 13 und 14) sind aufgrund ihrer Unterbringung in den erwähnten Schutzkammern 49 vor den durchströmenden Spänen geschützt.

Auch für die Anschlussleitung 23b ist eine Schutzmaßnahme vorgesehen. An der Innenseite der dargestellten Teilschale der Schutzhaube 53 ist ein strömungsgünstig geformter Schutzvorsprung 51 ausgebildet, der vor dem zu schützenden, den Strömungsweg 45 durchquerenden Abschnitt der Anschlussleitung 23b positioniert ist (vgl. auch Fig. 14) und so gewissermaßen als Abschirmung für diesen Leitungsabschnitt wirksam ist, um diesen vor den durchströmenden Spänen zu schützen. Der Schutzvorsprung 51 dient gleichzeitig als Anschraubpunkt für die andere Teilschale der Schutzhaube 53.

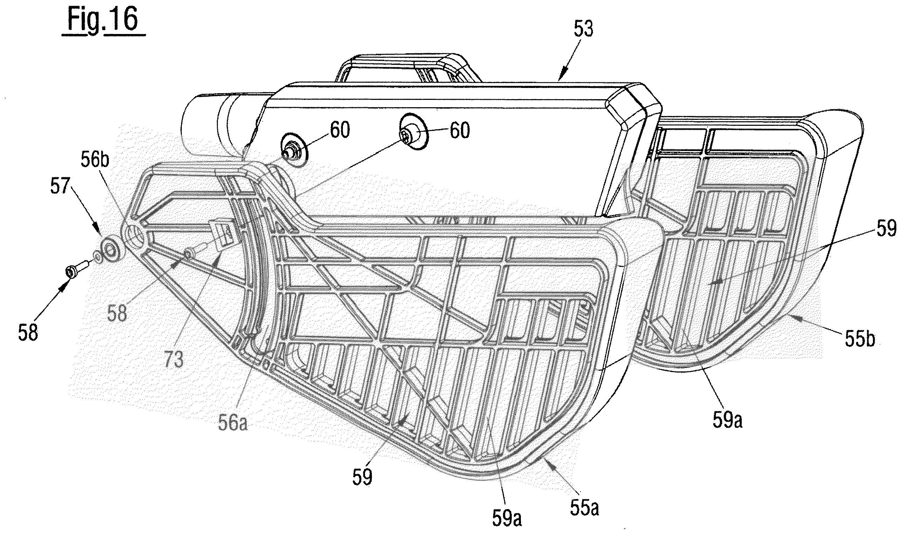

Fig. 16 veranschaulicht die schwenkbare Anbringung der beiden flügelartigen Seitenschutzelemente 55a, 55b an der Schutzhaube 53. Die Schwenkachse ist jeweils durch ein Kugellager 57 definiert, auf welchem das jeweilige Schutzelement 55a bzw. 55b mittels einer Öffnung 56b schwenkbar gelagert ist. Im zusammengesetzten Zustand ist das Kugellager 57 auf eine Aufnahme 60 gesteckt und durch eine Schraube 58 gesichert. Auch für eine Schwenkführung ist an der betreffenden Außenseite der Schutzhaube 53 eine Aufnahme 60 ausgebildet, die mit einem Führungsschlitz 56a des betreffenden Seitenschutzelementes 55a bzw. 55b zusammenwirkt. Diese Schwenkführung umfasst einen Gleiter 73, der am betreffenden Seitenschutzelement 55a bzw. 55b längs des Führungsschlitzes 56a geführt gleiten kann und durch eine Schraube 58, die im zusammengesetzten Zustand in die Aufnahme 60 geschraubt ist, gesichert ist. Der Gleiter 73 kann z.B. aus einem Kunststoff mit relativ niedrigem Reibungskoeffizient gefertigt sein, beispielsweise aus Polyoxymethylen.

Sowohl die Schwenklagerung als auch die Schwenkführung ist derart ausgebildet, dass die Schutzelemente 55a, 55b jeweils nicht eingespannt werden, d.h. keine Klemmkräfte wirksam sind, und dass durch die Wahl eines jeweiligen Lagerungskonzeptes und/oder Materials die Reibungskräfte minimiert werden, z.B. - wie vorstehend erwähnt - durch den Einsatz eines Kugellagers, beispielsweise eines Rillenkugellagers, für die Schwenklagerung und durch den Einsatz einer Gleitführung aus einem Material mit niedrigem Reibungskoeffizient für die Schwenkführung. Hierdurch ist sichergestellt ist, dass die Seitenschutzelemente 55a, 55b extrem reibungsarm verschwenkt werden können, d.h. dass nur sehr geringe Kräfte zum Verschwenken erforderlich sind. Auf diese Weise lassen sich einschlägige Sicherheitsbestimmungen erfüllen, die fordern, dass die Seitenschutzelemente 55a, 55b alleine aufgrund ihres Eigengewichts stets auf der Arbeitsfläche 13 oder einem Werkstück aufliegen müssen. Aufgrund ihrer abgerundeten Vorderseite können die Seitenschutzelemente 55a, 55b während des Sägebetriebs durch das jeweils zu bearbeitende Werkstück aufgeschwenkt werden.

Mit ausreichend eng beabstandeten Schutzstreben 59a durchsetzte Sichtöffnungen 59 der Seitenschutzelemente 55a, 55b gewährleisten eine gute Sicht auf den Arbeitsbereich von vorne, da die Schutzstreben 59a entsprechend schräggestellt sind.

### Bezugszeichenliste

- 11: Gestell
- 13: Arbeitsfläche
- 14: Bein
- 15: Sägeblatt
- 17: Träger, Spaltkeil
- 17a: gerade Seite
- 18: Rastnut
- 19: Halter
- 20a: Zwischenteil
- 20b: Rastknopf
- 20c: Steg
- 20d: Aufnahme
- 20e: Steckführung
- 20f: Vertiefung
- 21: Schutzabdeckung
- 23: Funktionseinheit
- 23a: Funktionsmodul, Lichtmodul
- 23b: Anschlussleitung
- 24: Kontaktmodul
- 24a: Trägerteil
- 24b: Abdeckteil
- 25: Netzteil
- 25a: Versorgungsleitung
- 26: Kontaktmodul
- 26a: Trägerteil
- 26b: Abdeckteil
- 26c: Durchbruch
- 27: elektrisches Leitungssystem
- 29: Vertiefung, Nut
- 29a: Breite der Nut
- 29b: Nuttiefe
- 31a: Einzelleitung, Leiterbahn
- 31b: Einzelleitung, Leiterbahn
- 33: Trägerschicht
- 35: Befestigungsschicht, Klebeschicht
- 37: Kontaktbereich
- 37a: Einzelkontakt
- 37b: Einzelkontakt
- 38: Gegenkontakt
- 38a: Einzelgegenkontakt
- 38b: Einzelgegenkontakt
- 39: Kontaktbereich
- 39a: Einzelkontakt
- 39b: Einzelkontakt
- 40: Gegenkontakt
- 40a: Einzelgegenkontakt
- 40b: Einzelgegenkontakt
- 41: Eintrittsbereich
- 43: Austrittsbereich
- 45: Strömungsweg
- 49: Schutzkammer
- 51: Schutzvorsprung
- 53: Schutzhaube
- 53a: Stutzen
- 55a: Seitenschutzelement
- 55b: Seitenschutzelement
- 56a: Führungsschlitz
- 56b: Öffnung
- 57: Kugellager
- 58: Schraube
- 59: Sichtöffnung
- 59a: Schutzstrebe
- 60: Aufnahme
- 61a: Klemmabschnitt
- 61b: Klemmabschnitt
- 63: Betätigungsmutter
- 63a: Fortsatz
- 63b: Fortsatz
- 65: Drehachse
- 66: Gewindeabschnitt
- 67: Verbindungsorgan
- 68: Kopf
- 68a: Flansch
- 69: Federelement, Druckfeder
- 70: Stützfläche
- 71: Aussparung des Trägers
- 73: Gleiter

## Patentansprüche

1. Unterflur-Zugsäge oder Tischkreissäge, mit
- einem Arbeitstisch, der eine Arbeitsfläche (13) zur Auflage von zu bearbeitenden Werkstücken bereitstellt,
- einem Sägeblatt (15), das teilweise unter der Arbeitsfläche (13) liegt und zumindest während des Sägebetriebs über die Arbeitsfläche (13) hinaus nach oben vorsteht,
- einem unter der Arbeitsfläche (13) angeordneten Antrieb für das Sägeblatt (15), der dazu ausgebildet ist, das Sägeblatt (15) während des Sägebetriebs in Rotation zu versetzen,
- einem Träger (17), der unterhalb der Arbeitsfläche (13) an einem Halter (19) abgestützt ist und über die Arbeitsfläche (13) hinaus nach oben vorsteht,
- einer von dem Träger (17) getragenen Schutzabdeckung (21), die dazu ausgebildet ist, in einer Schutzstellung vor einem Eingriff in das Sägeblatt (15) zu schützen, und
- einem Gegenkontakt (38,40),
wobei in die Schutzabdeckung (21) zumindest eine elektrische oder elektronische Funktionseinheit (23) integriert ist,
wobei unterhalb der Arbeitsfläche (13) eine Basiseinheit (25) für die Funktionseinheit (23) angeordnet ist,
wobei die Funktionseinheit (23) über eine Versorgungs- und/oder Kommunikationsstrecke mit der Basiseinheit (25) verbunden ist, und
wobei die Versorgungs- und/oder Kommunikationsstrecke ein elektrisches Leitungssystem (27) umfasst, das in den Träger (17) integriert ist, **dadurch gekennzeichnet,**
**dass** in dem Träger (17) für das Leitungssystem (27) eine Vertiefung (29) ausgebildet ist, in der das Leitungssystem (27) untergebracht ist,
**dass** am Träger (17) wenigstens ein Kontaktbereich (37, 39) für das Leitungssystem (27) vorgesehen ist, über den das Leitungssystem (27) an einen nicht zum Träger (17) gehörenden Gegenkontakt (38, 40) angeschlossen ist, und
**dass** der Gegenkontakt (38, 40) einen Schleifkontakt umfasst.

2. Säge nach Anspruch 1,
wobei die Vertiefung (29) lediglich an einer Seite des Trägers (17) ausgebildet ist oder mehrere Vertiefungen an verschiedenen Seiten des Trägers (17) ausgebildet sind, insbesondere wobei zwei Vertiefungen für das Leitungssystem (27) an einander gegenüberliegenden Trägerseiten vorhanden sind.

3. Säge nach Anspruch 1 oder 2,
wobei der Träger von einem Spaltkeil (17) gebildet oder zusätzlich zu einem Spaltkeil vorgesehen ist.

4. Säge nach einem der vorhergehenden Ansprüche,
wobei die Vertiefung als Nut (29) ausgebildet ist, wobei vorzugsweise die Nut als eine flache Nut ausgebildet ist, deren Breite (29a) ein Mehrfaches der Nuttiefe (29b) beträgt, und/oder wobei der Träger (17) als ein Flachteil ausgebildet ist und die Vertiefung (29) in einer Flachseite des Trägers (17) ausgebildet ist.

5. Säge nach einem der vorhergehenden Ansprüche,
wobei das Leitungssystem (27) mehrere parallel verlaufende, gegeneinander isolierte Einzelleitungen (31a, 31b) umfasst, und/oder
wobei das Leitungssystem (27) zumindest eine Leiterbahn (31a, 31b) umfasst.

6. Säge nach einem der vorhergehenden Ansprüche,
wobei das Leitungssystem (27) ein separat von dem Träger (17) hergestelltes Bauteil ist, das nach seiner Herstellung in den Träger (17) integriert worden ist.

7. Säge nach einem der vorhergehenden Ansprüche,
wobei das Leitungssystem (27) einen Mehrschichtaufbau aufweist, der zumindest eine elektrisch isolierende Trägerschicht (33) und wenigstens eine auf die Trägerschicht (33) aufgebrachte Leiterbahn (31a, 31b) umfasst, insbesondere wobei der Mehrschichtaufbau zusätzlich eine Befestigungsschicht (35) aufweist, bevorzugt eine Klebeschicht, welche auf der der Leiterbahn (31a, 31b) gegenüber liegenden Seite der Trägerschicht (33) vorgesehen und mittels welcher das Leitungssystem (27) an dem Träger (17) befestigt ist.

8. Säge nach einem der vorhergehenden Ansprüche,
wobei der Kontaktbereich (37, 39) von dem Leitungssystem (27) und vorzugsweise von einem Bereich zumindest einer Leiterbahn (31a, 31b) des Leitungssystems (27) gebildet ist, insbesondere wobei der Träger (17) mit dem Kontaktbereich (37, 39) in den Gegenkontakt (38, 40) eingesteckt oder auf den Gegenkontakt (38, 40) aufgeschoben ist.

9. Säge nach einem der vorhergehenden Ansprüche,
wobei die elektrische Verbindung zwischen dem Kontaktbereich (37, 39) und dem Gegenkontakt (38, 40) ein mechanisches Verstellen zwischen Kontaktbereich (37, 39) und Gegenkontakt (38, 40) unter Aufrechterhaltung der Wirksamkeit der elektrischen Kontaktierung erlaubt.

10. Säge nach einem der vorhergehenden Ansprüche,
wobei der Träger (17) gemeinsam mit der Schutzabdeckung (21) relativ zum Halter (19) in der Höhe relativ zur Arbeitsfläche (13) verstellbar ist.

11. Säge nach einem der vorhergehenden Ansprüche,
wobei die Schutzabdeckung (21) von dem Träger (17) abnehmbar ist, und/oder wobei die Funktionseinheit (23) wenigstens zwei unterschiedliche Funktionsmodule umfasst, und/oder wobei die Basiseinheit (25) zu einer bidirektionalen Kommunikation mit der Funktionseinheit (25) über das Leitungssystem (27) ausgebildet ist.

12. Säge nach einem der vorhergehenden Ansprüche,
wobei die Basiseinheit (25) dazu ausgebildet ist, über zumindest eine Leitung (31a, 31b) des Leitungssystems (27) die Funktionseinheit (23) mit Strom zu versorgen und über dieselbe Leitung (31a, 31b) eine unidirektionale oder bidirektionale Kommunikation mit der Funktionseinheit (23) zu führen.

13. Säge nach einem der vorhergehenden Ansprüche,
wobei innerhalb der Schutzabdeckung (21) ein von einem Eintrittsbereich (41) zu einem Austrittsbereich (43) führender Strömungsweg (45) für während des Sägebetriebs entstehende Sägespäne ausgebildet ist, und wobei in der Schutzabdeckung (21) für zumindest ein Bauteil (23a, 23b, 24) der Funktionseinheit (23) eine vom Strömungsweg (45) abgetrennte Schutzkammer (49) und/oder eine im Strömungsweg (45) gelegene, zumindest zum Teil quer oder schräg zur Strömungsrichtung verlaufende Schutzwand und/oder ein im Strömungsweg (45) gelegener Schutzvorsprung (51) vorgesehen ist.

14. Säge nach einem der vorhergehenden Ansprüche,
wobei die Schutzabdeckung (21) an dem Träger (17) durch Klemmung befestigbar ist.

15. Säge nach einem der vorhergehenden Ansprüche,
wobei die Schutzabdeckung (21) eine vor einem Eingriff in das Sägeblatt (15) von oben schützende Schutzhaube (53) sowie einen vor einem seitlichen Eingriff in das Sägeblatt (15) schützenden Seitenschutz (55a, 55b) umfasst, der an der Schutzhaube (53) mittels eines Kugellagers (57) oder einer Gleitbuchsenlagerung verschwenkbar gelagert ist, insbesondere wobei der Seitenschutz (55a, 55b) zumindest eine von Schutzstreben (59a) durchsetzte Sichtöffnung (59) aufweist, wobei die Schutzstreben (59a) schräggestellt sind, um eine Sicht auf das Sägeblatt (15) von schräg vorne zu ermöglichen.

## Claims

1. An underfloor pull saw or a circular table saw, comprising
- a workbench which provides a working surface (13) for supporting workpieces to be machined;
- a saw blade (15) which lies partly below the working surface (13) and projects upwardly beyond the working surface (13) at least during the sawing operation;
- a drive for the saw blade (15), said drive being arranged below the working surface (13) and being configured to set the saw blade (15) into rotation during the sawing operation;
- a carrier (17) which is supported beneath the working surface (13) at a holder (19) and which projects upwardly beyond the working surface (13);
- a protective cover (21) which is carried by the carrier (17) and which is configured to protect against an engagement into the saw blade (15) in a protective position; and
- a mating contact (38, 40)
wherein at least one electrical or electronic functional unit (23) is integrated into the protective cover (21),
wherein a base unit (25) for the functional unit (23) is arranged beneath the working surface (13),
wherein the functional unit (23) is connected to the base unit (25) via a supply and/or communication path (129), and
wherein the supply and/or communication path comprises an electrical line system (27) which is integrated into the carrier (17),
**characterized in that**
a recess (29) in which the line system (27) is accommodated is formed in the carrier (17) for the line system (27),
**in that** at least one contact region (37, 39) for the line system (27) is provided at the carrier (17), via which contact region (37, 39) the line system (27) is connected to a mating contact (38, 40) that does not belong to the carrier (17), and
**in that** the mating contact 38, 40) comprises a sliding contact.

2. A saw in accordance with claim 1,
wherein the recess (29) is formed only at one side of the carrier (17) or a plurality of recesses are formed at different sides of the carrier (17), in particular wherein two recesses for the line system (27) are present at mutually oppositely disposed carrier sides.

3. A saw in accordance with claim 1 or claim 2,
wherein the carrier is formed by a splitting wedge (17) or is provided in addition to a splitting wedge (17).

4. A saw in accordance with any one of the preceding claims,
wherein the recess is formed as a groove (29), wherein preferably the groove is formed as a shallow groove whose width (29a) amounts to a multiple of the groove depth (29b), and/or wherein the carrier (17) is formed as a flat part and the recess (29) is formed in a flat side of the carrier (17).

5. A saw in accordance with any one of the preceding claims,
wherein the line system (27) comprises a plurality of individual lines (31a, 31b) which extend in parallel and which are insulated from one another, and/or
wherein the line system (27) comprises at least one conductor path (31a, 31b).

6. A saw in accordance with any one of the preceding claims,
wherein the line system (27) is a component which is manufactured separately from the carrier (17) and which was integrated into the carrier (17) after its manufacture.

7. A saw in accordance with any one of the preceding claims,
wherein the line system (27) has a multilayer design which comprises at least one electrically insulating carrier layer (33) and at least one conductor path (31a, 31b) applied to the carrier layer (33), in particular wherein the multilayer design additionally has a fastening layer (35), preferably an adhesive layer, which is provided at the side of the carrier layer (33) disposed opposite the conductor path (31a, 31b) and by means of which the line system (27) is fastened to the carrier (17).

8. A saw in accordance with any one of the preceding claims,
wherein the contact region (37, 39) is formed by the line system (27) and preferably by a region of at least one conductor path (31a, 31b) of the line system (27), in particular wherein the carrier (17) with the contact region (37, 39) is inserted into the mating contact (38, 40) or is pushed onto the mating contact (38, 40).

9. A saw in accordance with any one of the preceding claims,
wherein the electrical connection between the contact region (37, 39) and the mating contact (38, 40) allows a mechanical adjustment between the contact region (37, 39) and the mating contact (38, 40) while maintaining the effectiveness of the electrical contacting.

10. A saw in accordance with any one of the preceding claims,
wherein the carrier (17), together with the protective cover (21), is vertically adjustable relative to the working surface (13) with respect to the holder (19).

11. A saw in accordance with any one of the preceding claims,
wherein the protective cover (21) is removable from the carrier (17), and/or wherein the functional unit (23) comprises at least two different functional modules, and/or wherein the base unit (25) is configured for a bidirectional communication with the functional unit (25) via the line system (27).

12. A saw in accordance with any one of the preceding claims,
wherein the base unit (25) is configured to supply the functional unit (23) with power via at least one line (31a, 31b) of the line system (27) and to conduct a unidirectional or bidirectional communication with the functional unit (23) via the same line (31a, 31b).

13. A saw in accordance with any one of the preceding claims,
wherein a flow path (45) for sawdust produced during the sawing operation that leads from an entry region (41) to a discharge region (43) is formed within the protective cover (21), and wherein a protective chamber (49) separated from the flow path (45) and/or a protective wall disposed in the flow path (45) and extending at least partly transversely or obliquely to the flow direction and/or a protective projection (51) disposed in the flow path (45) is/are provided in the protective cover (21) for at least one component (23a, 23b, 24) of the functional unit (23).

14. A saw in accordance with any one of the preceding claims,
wherein the protective cover (21) can be fastened to the carrier (17) by clamping.

15. A saw in accordance with any one of the preceding claims,
wherein the protective cover (21) comprises a protective hood (53), which protects against an engagement into the saw blade (15) from above, and a side protection (55a, 55b) which protects against a lateral engagement into the saw blade (15) and which is pivotably supported at the protective hood (53) by means of a ball bearing (57) or a sliding bushing bearing, in particular wherein the side protection (55a, 55b) has at least one viewing opening (59) passed through by protective struts (59a), wherein the protective struts (59a) are slanted to enable a view of the saw blade (15) obliquely from the front.

## Revendications

1. Scie circulaire coulissante ou scie circulaire sur table, comprenant
- une table de travail qui fournit une surface de travail (13) destinée à supporter des pièces à oeuvrer devant être usinées,
- une lame de scie (15) qui se trouve en partie sous la surface de travail (13) et qui, au moins pendant l'opération de sciage, est en saillie vers le haut au-dessus de la surface de travail (13),
- un entraînement pour la lame de scie (15), agencé sous la surface de travail (13), qui est réalisé pour déplacer la lame de scie (15) en rotation pendant l'opération de sciage,
- un support (17) qui est en soutenu en dessous de la surface de travail (13) au niveau d'un élément de maintien (19) et qui est en saillie vers le haut au-dessus de la surface de travail (13),
- une couverture de protection (21) portée par le support (17), qui est réalisée pour protéger d'une intervention sur la lame de scie (15) dans une position de protection, et
- un contact antagoniste (38, 40),
dans laquelle au moins une unité fonctionnelle (23) électrique ou électronique est intégrée dans la couverture de protection (21),
dans laquelle une unité de base (25) pour l'unité fonctionnelle (23) est agencée en dessous de la surface de travail (13),
dans laquelle l'unité fonctionnelle (23) est raccordée à l'unité de base (25) via un trajet d'alimentation et/ou de communication, et
dans laquelle le trajet d'alimentation et/ou de communication comprend un système conducteur (27) électrique qui est intégré dans le support (17),
**caractérisée en ce que** :
il est réalisé, dans le support (17), un évidement (29) pour le système conducteur (27), dans lequel le système conducteur (27) est logé,
il est prévu, au niveau du support (17), au moins une zone de contact (37, 39) pour le système conducteur (27) via laquelle le système conducteur (27) est connecté à un contact antagoniste (38, 40) n'appartenant pas au support (17), et
le contact antagoniste (38, 40) comprend un contact glissant.

2. Scie selon la revendication 1,
dans laquelle l'évidement (29) est réalisé uniquement au niveau d'un côté du support (17) ou plusieurs évidements sont réalisés au niveau de différents côtés du support (17), notamment dans laquelle deux évidements pour le système conducteur (27) sont présents au niveau de côtés opposés du support.

3. Scie selon la revendication 1 ou 2,
dans laquelle le support est formé d'un couteau diviseur (17) ou est prévu en plus d'un couteau diviseur.

4. Scie selon l'une quelconque des revendications précédentes,
dans laquelle l'évidement est réalisé en tant que rainure (29), la rainure étant de préférence réalisée en tant que rainure plate dont la largeur (29a) est un multiple de la profondeur de rainure (29b), et/ou dans laquelle le support (17) est réalisé en tant qu'élément plat et l'évidement (29) est réalisé dans un côté plat du support (17).

5. Scie selon l'une quelconque des revendications précédentes,
dans laquelle le système conducteur (27) comprend plusieurs lignes individuelles (31a, 31b) s'étendant en parallèle et isolées les unes des autres, et/ou
dans laquelle le système conducteur (25) comprend au moins une piste conductrice (31a, 31b).

6. Scie selon l'une quelconque des revendications précédentes,
dans laquelle le système conducteur (27) est un composant fabriqué séparément du support (17), qui a été intégré dans le support (17) après sa fabrication.

7. Scie selon l'une quelconque des revendications précédentes,
dans laquelle le système conducteur (27) présente une structure à plusieurs couches qui comprend au moins une couche de support (33) isolée électriquement et au moins une piste conductrice (31a, 31b) appliquée sur la couche de support (33), notamment dans laquelle la structure à plusieurs couches présente en outre une couche de fixation (35), de préférence une couche adhésive, qui est prévue sur le côté de la couche support (33) opposé à la piste conductrice (31a, 31b) et au moyen de laquelle le système conducteur (27) est fixé au support (17).

8. Scie selon l'une quelconque des revendications précédentes,
dans laquelle la zone de contact (37,39) est formée du système conducteur (27) et de préférence d'une zone d'au moins une piste (31a, 31b) du système conducteur (27), notamment dans laquelle le support (17) est enfiché avec la zone de contact (37, 39) dans le contact antagoniste (38, 40) ou enfilé sur le contact antagoniste (38, 40).

9. Scie selon l'une quelconque des revendications précédentes,
dans laquelle le raccord électrique entre la zone de contact (37, 39) et le contact antagoniste (38, 40) permet un déplacement mécanique entre la zone de contact (37, 39) et le contact antagoniste (38, 40) tout en maintenant l'efficacité du contact électrique.

10. Scie selon l'une quelconque des revendications précédentes,
dans laquelle le support (17), conjointement avec la couverture de protection (21), peut être déplacé en hauteur relativement à l'élément de maintien (19) par rapport à la surface de travail (13).

11. Scie selon l'une quelconque des revendications précédentes,
dans laquelle la couverture de protection (21) peut être retirée du support (17), et/ou dans laquelle l'unité fonctionnelle (23) comprend au moins deux modules fonctionnels différents, et/ou dans laquelle l'unité de base (25) est réalisée pour une communication bidirectionnelle avec l'unité fonctionnelle (25) via le système conducteur (27).

12. Scie selon l'une quelconque des revendications précédentes,
dans laquelle l'unité de base (25) est réalisée pour alimenter l'unité fonctionnelle (23) en électricité via au moins une ligne (31a, 31b) du système conducteur (27) et pour effectuer, via la même ligne (31a, 31b), une communication unidirectionnelle ou bidirectionnelle avec l'unité fonctionnelle (23).

13. Scie selon l'une quelconque des revendications précédentes,
dans laquelle il est réalisé, à l'intérieur de la couverture de protection (21), un chemin d'écoulement menant depuis une zone d'entrée (41) jusqu'à une zone de sortie (43) pour les copeaux issus de l'opération de sciage, et dans laquelle il est prévu, dans la couverture de protection (21), pour au moins un composant (23a, 23b, 24) de l'unité fonctionnelle (23), une chambre de protection (49) séparée du chemin d'écoulement (45) et/ou une paroi de protection disposée dans le chemin d'écoulement (45), s'étendant au moins en partie transversalement ou en biais par rapport à la direction d'écoulement, et/ou une saillie de protection (51) disposée dans le chemin d'écoulement (45).

14. Scie selon l'une quelconque des revendications précédentes,
dans laquelle la couverture de protection (21) peut être fixée par serrage au niveau du support (17).

15. Scie selon l'une quelconque des revendications précédentes,
dans laquelle la couverture de protection (21) comprend un capot de protection (53) protégeant d'une intervention par le haut sur la lame de scie (15), et une protection latérale (55a, 55b) protégeant d'une intervention latérale sur la lame de scie (15), qui peut être montée de manière pivotante au niveau du capot de protection (53) au moyen d'un roulement à billes (57) ou d'un palier lisse, notamment dans laquelle la protection latérale (55a, 55b) présente au moins une ouverture de visualisation (59) traversée par des barres de protection (59a), les barres de protection (59a) étant disposées en biais pour permettre une vue de face et de biais sur la lame de scie (15).
